(19) Europäisches Patentamt
European Patent Office
Office européen des brevets

(11) Veröffentlichungsnummer: **0 614 450 B1**

(12) **EUROPÄISCHE PATENTSCHRIFT**

(45) Veröffentlichungstag der Patentschrift: **30.08.95**

(51) Int. Cl.6: **C03C 25/02**, C09D 175/16

(21) Anmeldenummer: **92924602.3**

(22) Anmeldetag: **24.11.92**

(86) Internationale Anmeldenummer:
**PCT/EP92/02699**

(87) Internationale Veröffentlichungsnummer:
**WO 93/11080 (10.06.93 93/14)**

(54) **FLÜSSIGE, STRAHLENHÄRTBARE ÜBERZUGSMASSE FÜR DIE BESCHICHTUNG VON GLASOBERFLÄCHEN.**

(30) Priorität: **28.11.91 DE 4139127**

(43) Veröffentlichungstag der Anmeldung:
**14.09.94 Patentblatt 94/37**

(45) Bekanntmachung des Hinweises auf die Patenterteilung:
**30.08.95 Patentblatt 95/35**

(84) Benannte Vertragsstaaten:
**AT BE CH DE DK ES FR GB IT LI NL SE**

(56) Entgegenhaltungen:
**EP-A- 0 119 011**
**EP-A- 0 304 837**
**WO-A-90/06289**
**WO-A-90/13523**
**US-A- 4 002 651**

**PATENT ABSTRACTS OF JAPAN vol. 15, no. 128 (C-818)28. March 1991 & JP-A-3012346**

(73) Patentinhaber: **BASF Lacke + Farben AG**
**Glasuritstrasse 1**
**D-48165 Münster-Hiltrup (DE)**

(72) Erfinder: **Schunck, Stephan, Dr.**
**Auf dem Plätzchen6**
**D-86152 Augsburg (DE)**
Erfinder: **Hintze-Brüning, Horst, Dr.**
**Rolevinckweg 15**
**D-48165 Münster (DE)**
Erfinder: **Blum, Rainer**
**Rüdigerstrasse 64**
**D-67069 Ludwigshafen (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

**EP 0 614 450 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist eine flüssige, strahlenhärtbare Überzugsmasse für die Beschichtung von Glasoberflächen, enthaltend

A) 56 bis 89 Gew.-%, bezogen auf die Überzugsmasse, mindestens eines, gegebenenfalls Harnstoffgruppen enthaltenden, ethylenisch ungesättigten Polyurethans,

B) 10 bis 30 Gew.-%, bezogen auf die Überzugsmasse, mindestens eines ethylenisch ungesättigten Monomers,

C) 0,5 bis 8 Gew.-%, bezogen auf die Überzugsmasse, mindestens eines Photoinitiators sowie

D) 0,05 bis 6 Gew.-%, bezogen auf die Überzugsmasse, eines Silans,

wobei die Summe der Komponenten (A) bis (D) jeweils 100 Gew.-% beträgt.

Gegenstand der vorliegenden Erfindung ist außerdem ein Verfahren zum Beschichten von Glasoberflächen, insbesondere optischen Glasfasern unter Verwendung dieser strahlenhärtbaren Überzugsmassen.

Optische Glasfasern haben eine ständig wachsende Bedeutung auf dem Gebiet der Kommunikation als Lichtwellenleiterfasern erlangt. Für diesen Anwendungszweck ist es unbedingt erforderlich, die Glasoberfläche vor Feuchtigkeit und Abnutzungserscheinungen zu schützen. Die Glasfasern werden daher direkt im Anschluß an ihre Herstellung mit einer schützenden Lackschicht versehen.

So ist es beispielsweise aus der EP-B-114 982 bekannt, Glasfasern zunächst mit einer elastischen, aber wenig harten und wenig zähen Pufferschicht (Grundierung) zu versehen und danach einen strahlenhärtbaren Decklack zu applizieren, der eine hohe Härte und Zähigkeit aufweist. Der zweischichtige Aufbau soll einen guten Schutz der Glasfasern bei mechanischer Beanspruchung auch bei tiefen Temperaturen gewährleisten. Als Decklack werden in der EP-B-114 982 strahlenhärtbare Beschichtungszusammensetzungen auf Basis eines diethylenische Endgruppen aufweisenden Polyurethans, eines diethylenisch ungesättigten Esters eines Diglycidylethers eines Bisphenols und eines monoethylenisch ungesättigten Monomers, wobei die Glasübergangstemperatur des aus diesem Monomer hergestellten Homopolymers oberhalb 55 °C liegt, eingesetzt.

Derartige Glasfaserbeschichtungen weisen jedoch den erheblichen Nachteil einer nur schlechten Haftung auf der Glasoberfläche auf. Insbesondere bei Feuchtigkeitsbelastung wird diese Haftung noch weiter verschlechtert, unter Umständen sogar so stark, daß es zu einem vollständigen Verlust der Haftung auf der Glasoberfläche kommt. Das Problem der schlechten Haftung der Überzugsmassen auf der Glasoberfläche ist bekannt. Zur Haftungsverbesserung werden daher den Überzugsmassen häufig Organosilane als Haftvermittler zugesetzt.

Aus der EP-A-149 741 sind flüssige, strahlenhärtbare Glasfaserbeschichtungsmittel bekannt, die neben einer strahlenhärtbaren, polyethylenisch ungesättigten polymeren Verbindung 0,5 bis 5 %, bezogen auf die Überzugszusammensetzung, eines Polyalkoxisilans enthalten. Geeignet sind solche Polyalkoxisilane, die einen organischen Substituenten tragen, der ein einzelnes aktives Amino- oder Mercaptyl-Wasserstoffatom trägt, das in einer Michael-Addition mit den ethylenisch ungesättigten Bindungen reagieren kann. Als Beispiel für geeignete Silane wird $\gamma$-Mercaptopropyl-trimethoxisilan genannt. Gemäß der Lehre der EP-A-149 741 gelingt es nur durch Einsatz derartiger Silane, die Haftung auch bei Feuchtigkeitsbelastung zu verbessern.

Ferner sind aus der DE-OS 38 40 644 flüssige, strahlenhärtbare Glasfaserbeschichtungsmittel bekannt, die als Bindemittel ein diethylenisch ungesättigtes Polyurethanharz sowie ethylenisch ungesättigte Monomere als Reaktivverdünner enthalten. Zur Verbesserung der Haftung auch bei Feuchtigkeitsbelastung enthalten diese Glasfaserbeschichtungsmittel 0,05 bis 6 Gew.-% N-$\beta$-Aminoethyl-$\gamma$-aminopropyltrimethoxisilan, $\gamma$-Amino-propyltrimethoxisilan, N-Methyl-$\gamma$-aminopropyltrimethoxisilan oder triaminomodifiziertes Propyltrimethoxisilan. Diese Glasfaserbeschichtungsmittel sind jedoch noch hinsichtlich der Produktionssicherheit verbesserungsbedürftig.

Weiterhin sind aus der noch nicht veröffentlichten deutschen Patentanmeldung P 4107664.8 Lösungen auf der Basis von Polykondensaten mit N-enthaltenden heterocyclischen Ringsystemen bekannt, die Azidosilane als Haftvermittler enthalten. Der Zusatz von Azidosilanen zu strahlenhärtbaren Überzugsmassen auf der Basis von ethylenisch ungesättigten Polyurethanen ist jedoch nicht beschrieben.

Schließlich ist es aus der noch nicht veröffentlichten deutschen Patentanmeldung P 4113655.1 bekannt, ein Gemisch aus Azidosilanen und Aminoalkoxisilanen als Haftvermittler zwischen anorganischen Substraten und Polykondensaten, die als Struktureinheiten heterocyclische Ringsysteme mit N-Atomen aufweisen. Der Zusatz dieser Haftvermittler zu strahlenhärtbaren Überzugsmassen auf der Basis von ethylenisch ungesättigten Polyurethanen ist wiederum nicht beschrieben.

Der vorliegenden Erfindung lag daher die Aufgabe zugrunde, strahlenhärtbare Überzugsmassen für die Beschichtung von Glasoberflächen, insbesondere optischen Glasfasern, zur Verfügung zu stellen, bei denen

die resultierende Beschichtung nach Feuchtigkeitsbelastung keinen oder nur einen geringen Verlust der Haftung im Vergleich mit der entsprechenden frisch hergestellten und direkt nach der Aushärtung untersuchten Beschichtung aufweist. Ferner sollten die Beschichtungsmassen mit einer hohen Produktionssicherheit herstellbar sein.

Die der Erfindung zugrundeliegende Aufgabe wird überraschenderweise gelöst durch eine flüssige, strahlenhärtbare Überzugsmasse für die Beschichtung von Glasoberflächen, die

A) 56 bis 89 Gew.-%, bezogen auf die Überzugsmasse, mindestens eines, gegebenenfalls Harnstoffgruppen enthaltendem, ethylenisch ungesättigten Polyurethans,

B) 10 bis 30 Gew.-%, bezogen auf die Überzugsmasse, mindestens eines ethylenisch ungesättigten Monomers,

C) 0,5 bis 8 Gew.-%, bezogen auf die Überzugsmasse, mindestens eines Photoinitiators sowie

D) 0,05 bis 6 Gew.-%, bezogen auf die Überzugsmasse, eines Silans,

enthält, wobei die Summe der Komponenten (A) bis (D) jeweils 100 Gew.-% beträgt.

Die Überzugsmasse ist dadurch gekennzeichnet, daß als Komponente (D)

$d_1$) mindestens ein Azidosilan der allgemeinen Formel (I)

$$N_3\text{-}R^3\text{-Si-}R^1{}_n(OR^2)_{3-n} \qquad (I)$$

worin $R^1$ für eine $C_1$-$C_3$-Alkyl-, eine Phenyl-, Benzyl- oder Toluylgruppe, $R^2$ für eine $C_1$-$C_4$-Alkyl-, $C_2$-$C_4$-Alkoxialkyl-, eine Phenyl- oder Benzylgruppe, $R^3$ für eine $C_1$-$C_8$-Alkylengruppe, welche durch ein Sauerstoffatom, Schwefelatom oder eine -(N-$R^4$)-Gruppe, worin $R^4$ ein Wasserstoff, eine Methyl-, Ethyl- oder Phenylgruppe bedeutet, unterbrochen sein kann, und n für 0,1 oder 2 steht, und

$d_2$) ggf. mindestens ein Aminoalkoxisilan der Formel (II)

$$H_2N\text{-}R^5\text{-Si-}R^6{}_m(OR^7)_{3-m} \qquad (II)$$

worin $R^5$ für eine $C_1$-$C_6$-Alkylen-, eine $C_5$-$C_6$-Cycloalkylen- oder -Arylengruppe, welche zusätzlich durch ein oder zwei $C_1$-$C_3$-Alkylgruppen substituiert sein können, $R^6$ und $R^7$ unabhängig voneinander für eine $C_1$-$C_6$-Alkyl- oder eine $C_5$-$C_6$-Cycloalkylgruppe, welche ebenfalls zusätzlich durch ein oder zwei $C_1$-$C_3$-Alkyl-gruppen substituiert sein können, stehen und m = 0, 1 oder 2 sein kann, eingesetzt wird.

Es war angesichts der Vielzahl von als Haftvermittler bekannter Organosilicium-Verbindungen überraschend und nicht vorhersehbar, daS durch den Einsatz von Azidosilanen, ggf. in Kombination mit Aminoalkoxisilanen, die Haftung der Beschichtungsmittel nach Feuchtigkeitsbelastung im Vergleich zu den bekannten Beschichtungsmitteln, die als Haftvermittler beispielsweise N-$\beta$-Aminoethyl-$\gamma$-aminopropyltrimethoxisilan enthalten, deutlich verbessert wird, während es bei Einsatz anderer bekannter Haftvermittler, wie z.B.$\gamma$-Glycidyloxipropyltrimethoxisilan und dem Monohydrochlorid des N-$\beta$-(N-Vinylbenzylamino)-ethyl-$\gamma$-aminopropyltrimethoxisilans bei Feuchtigkeitsbelastung zu einer erheblichen Verschlechterung der Haftung kommt.

Im folgenden wird nun die erfindungsgemäße Überzugsmasse näher erläutert:

Die als filmbildende Komponente eingesetzten ethylenisch ungesättigten Polyurethane (A) können erhalten werden durch Umsetzung eines Di- oder Polyisocyanates mit einem Kettenverlängerungsmittel aus der Gruppe der Diole/Polyole und/oder Diamine/Polyamine und/oder Dithiole/Polythiole und/oder Alkanolamine und anschließender Umsetzung der restlichen freien Isocyanatgruppen mit mindestens einem Hydroxialkylacrylat anderer ethylenisch ungesättigter Carbonsäuren.

Die Mengen an Kettenverlängerungsmittel, Di- bzw. Polyisocyanat und Hydroxialkylester einer ethylenisch ungesättigten Carbonsäure werden dabei so gewählt, daß

1.) das Äquivalentverhältnis der NCO-Gruppen zu den reaktiven Gruppen des Kettenverlängerungsmittels (Hydroxyl-, Amino- bzw. Mercaptylgruppen) zwischen 3:1 und 1:2, bevorzugt bei 2:1 liegt und

2.) die OH-Gruppen der Hydroxialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Polyurethane (A) herzustellen, indem zunächst ein Teil der Isocyanatgruppen eines Di- oder Polyisocyanates mit mindestens einem Hydroxialkylester einer ethylenisch ungesättigten Carbonsäure umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxialkylester ungesättigter Carbonsäuren so gewählt, daß das Äquivalentverhältnis der NCO-Gruppen zu den reaktiven Gruppen des Kettenverlängerungsmittels zwischen 3:1 und 1:2, bevorzugt bei 2:1, liegt und das Äquivalentverhältnis der restlichen NCO-Gruppen zu den OH-Gruppen des Hydroxialkylesters 1:1 beträgt.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend ein weiterer Teil der Isocyanatgruppen mit dem Hydroxialkylester einer ethylenisch ungesättigten Carbonsäure und im Anschluß hieran können die restlichen Isocyanatgruppen mit einem Diamin umgesetzt werden.

Diese verschiedenen Herstellverfahren der Polyurethane sind bekannt (vgl. beispielsweise EP-A-204 161) und bedürfen daher keiner genaueren Beschreibung.

Für die Herstellung der Polyurethane (A) geeignet sind aromatische, aliphatische und cycloaliphatische Di- und Polyisocyanate, wie z.B. 2,4-, 2,6-Toluylen-diisocyanat und deren Gemische, 4,4'-Diphenylmethandiisocyanat, m-Phenylen-, p-Phenylen-, 4,4'-Diphenyl-, 1,5-Naphthalin-, 1,4-Naphthalin-, 4,4'-Toluidin-, Xylylendiisocyanat sowie substituierte aromatische Systeme, wie z.B. Dianisidindiisocyanate, 4,4'-Diphenyletherdiisocyanate oder Chlorodiphenylendiisocyanate und höherfunktionelle aromatische Isocyanate, wie z.B. 1,3,5-Triisocyanatobenzol, 4,4'-,4''-Triisocyanattriphenylmethan, 2,4,6-Triisocyanatotoluol und 4,4'-Diphenyldimethylmethan-2,2', 5,5'-tetraisocyanat; cycloaliphatische Isocyanate, wie z.B. 1,3-Cyclopentan-, 1,4-Cyclohexan-, 1,2-Cyclohexan-, 4,4'- Methylen-bis-(cyclohexylisocyanat) und Isophorondiisocyanat; aliphatische Isocyanate, wie z.B. Trimethylen-, Tetramethylen-, Pentamethylen-, Hexamethylen-, Trimethylhexamethylen-1,6-diiso-cyanat und Tris-hexamethylen-triisocyanat sowie die in der EP-A-204161, Spalte 4, Zeilen 42 bis 49 beschriebenen, von Dimerfettsäuren abgeleiteten Diisocyanate.

Bevorzugt eingesetzt werden 2,4-und 2,6-Toluylendiisocyanat, 4-4'-Diphenylmethandiisocyanat, Hexamethylendiisocyanat, Isophorondiisocyanat und 4,4'-Methylenbis-(cyclohexylisocyanat).

Beispiele für geeignete Di- und Polyole sind z.B. Ethylenglykol, Propylenglykol-1,2 und -1,3, Butandiole, Pentandiole, Neopentylglykol, Hexandiole, 2-Methylpentandiol-1,5, 2-Ethylbutandiol-1,4, Dimethylolcyclohexan, Glycerin, Trimethylolethan, Trimethylolpropan und Trimethylolbutan, Erythrit, Mesoerythrit, Arabit, Adonit, Xylit, Mannit, Sorbit, Dulcit, Hexantriol, (Poly)-Pentaerythritol; ferner Monoether, wie Diethylenglykol und Dipropylenglykol sowie Polyether und die Addukte aus den genannten Polyolen und Alkylenoxiden. Beispiele von Alkylenoxiden, die sich für eine Polyaddition an diese Polyole unter Bildung von Polyethern eignen, sind Ethylenoxid, Propylenoxid, Butylenoxid und Styroloxid. Man bezeichnet diese Polyadditionsprodukte im allgemeinen als Polyether mit endständigen Hydroxylgruppen. Sie können linear oder verzweigt sein. Beispiele von solchen Polyethern sind Polyoxiethylenglykole mit einem Molekulargewicht von 200 bis 4000, Polyoxipropylenglykole mit einem Molekulargewicht von 200 bis 4000, Polyoxitetramethylenglykol, Polyoxihexamethylenglykol, Polyoxinonamethylenglykol, Polyoxidecamethylenglykol, Polyoxidodecamethylenglykol und Mischungen davon. Andere Typen von Polyoxialkylenglykolethern können ebenfalls verwendet werden. Geeignete Polyetherpolyole sind auch diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Dipentaerythrit, Tripentaerythrit, Polypentaerythrit, Methylglukosiden und Saccharose mit Alkylenoxiden, wie Ethylenoxid, Propylenoxid oder Mischungen davon.

Beispiele für geeignete Polyetherdiole sind auch die Polymerisationsprodukte des Tetrahydrofurans oder Butylenoxids. Einsetzbar sind weiterhin auch Polyesterpolyole, bevorzugt Polyesterdiole, die z.B. herstellbar sind durch Umsetzung von den bereits genannten Glykolen mit Dicarbonsäuren, wie z.B. Phthalsäure, Isophthalsäure, Hexahydrophthalsäure, Adipinsäure, Azelain-, Sebazin-, Malein-, Glutar-, Tetrachlorphthalsäure und Hexachlorheptandicarbonsäure.

Anstelle dieser Säuren können auch ihre Anhydride, soweit sie existieren, verwendet werden.

Einsetzbar sind auch Polycaprolactondiole und -triole. Diese Produkte erhält man beispielsweise durch Umsetzung eines $\epsilon$-Caprolactons mit einem Diol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{\displaystyle O}{\|}}{C}-(CHR)_n-CH_2O-$$

entsprechen, in der n bevorzugt 4 bis 6 ist und der Substituent Wasserstoff, ein Alkylrest, ein Cycloalkylrest oder ein Alkoxirest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden.

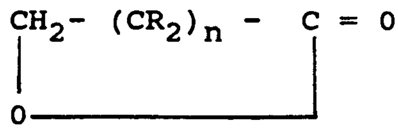

in der n und R die bereits angegebene Bedeutung haben. Die bei der Erfindung für die Herstellung der Polyesterdiole bevorzugten Lactone sind die Caprolactone, bei denen n den Wert 4 hat. Das am meisten bevorzugte Lacton ist das substituierte $\epsilon$-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Diolen sind die bereits oben für die Umsetzung mit den Carbonsäuren aufgeführten Diole.

Beispiele für geeignete Amine sind Ethylendiamin, Tri-, Tetra-, Penta-, Hexa-, Hepta-, Nona-, Deca- und Dodecamethylendiamin, 2,2,4 bzw. 2,4,4-Trimethylhexa-methylendiamin, Propylendiamin sowie die entsprechenden Polyalkylendiamine, wie z.B. Polypropylendiamin, Polyetherdiamine mit einem Molekulargewicht von 200 bis 4000, z.B. Polyoxiethylendiamin, Polyoxipropylendiamin, Polyoxitetramethylendiamin, 1,3- bzw. 1,4-Butylendiamin, Isophorondiamin, 1,2- und 1,4-Diaminocyclohexan, 4,4'-Diaminodicyclohexylmethan, Bis-(3-methyl-4-aminocyclohexyl-)methan, 2,2-Bis(4-aminocyclohexyl-)propan, 4,7-Dioxadecan-1,10-diamin, 4,9-Dioxadodecan-1,12-diamin, 7-Methyl-4,10-dioxatridecan-1,13-diamin, Nitriltris-(ethanamin), Ethanolamin, Propanolamin, N-(2-Aminoethyl)ethanol, Polyetherpolyamine, Bis-(3-aminopropyl-)methylamin, 3-Amino-1-(methylamino-)propan, 3-Amino-1-(cyclohexylamino-)propan, N-(2-hydroxiethyl-)ethylendiamin, Tris-(2-aminoethyl-)amin sowie Polyamine der Formel $H_2N\text{-}(R_2\text{-}NH)_nR_1\text{-}NH_2$. n ist eine ganze Zahl zwischen 1 und 6, bevorzugt 1 - 3. $R_1$ und $R_2$ sind gleiche oder verschiedene Alkylengruppen bzw. Cycloalkylengruppen bzw. Ethergruppen enthaltende Alkylengruppen mit 2-6, bevorzugt 2-4, C-Atomen. Beispiele für derartige Polyalkylenpolyamine sind Diethylentriamin, Triethylentetramin, Tetraethylenpentamin, Dipropylentriamin, Tripropylentetramin, Tetrapropylenpentamin und Dibutylentriamin.

Als Kettenverlängerungsmittel einsetzbar sind auch Di- und Polythiole, wie z.B. Dithioethylenglykol, 1,2- und 1,3-Propandithiol, Butandithiole, Pentandithiole, Hexandithiole sowie die übrigen S-H analogen Verbindungen der aufgeführten Di- und Polyole.

Zur Einführung der ethylenisch-ungesättigten Gruppen in das Polyurethan geeignet sind Hydroxialkylester ethylenisch ungesättigter Carbonsäuren, wie z.B. Hydroxiethylacrylat, Hydroxipropylacrylat, Hydroxibutylacrylat, Hydroxiamylacrylat, Hydroxihexylacrylat, Hydroxioctylacrylat sowie die entsprechenden Hydroxialkylester der Methacryl-, Fumar-, Malein-, Itacon-, Croton- und Isocrotonsäure.

Ferner sind für den Einsatz in den erfindungsgemäßen Überzugsmitteln als Komponente A auch die in der EP-A-223086 beschriebenen ungesättigten Polyurethane geeignet.

Für den Einsatz in den erfindungsgemäßen Überzugsmitteln als Komponente A geeignet sind auch die in der nicht vorveröffentlichten deutschen Patentanmeldung P 40 27 770.4 beschriebenen strahlenhärtbaren Oligomere mit mehreren ethylenisch ungesättigten Endgruppen und mehreren Urethan- und/oder Harnstoffgruppen pro Molekül. Diese Oligomere sind herstellbar aus

a) mindestens einer hydroxi- und/oder aminofunktionellen Verbindung mit einer Funktionalität zwischen 3 und 4 und mit einem zahlenmittleren Molekulargewicht zwischen 300 und 4000,

b) mindestens einer Verbindung mit 2 Hydroxyl- und/oder Aminogruppen pro Molekül und mit einem zahlenmittleren Molekulargewicht zwischen 200 und 4000,

c) mindestens einer monoethylenisch ungesättigten Verbindung mit einer Gruppe mit einem aktiven Wasserstoffatom pro Molekül und mit einem zahlenmittleren Molekulargewicht zwischen 116 und 1000 und

d) mindestens einem aliphatischen und/oder cycloaliphatischen Diisocyanat,

wobei die Komponenten a bis d in solchen Mengen eingesetzt werden, daß

1.) das Molverhältnis der Komponente a zu der Komponente b zwischen 0,1 : 1 und 1,1 : 1, bevorzugt zwischen 0,1 und 0,8, liegt,

2.) das Molverhältnis der Komponente c zu der Komponente a zwischen 2,0 : 1 und 10 : 1, bevorzugt zwischen 2,5 und 10, liegt und

3.) das Äquivalentverhältnis der Isocyanatgruppen der Komponente d zu den Hydroxyl- und/oder Aminogruppen der Summe der Komponenten a bis c zwischen 0,9 und 1,0 liegt.

Als Komponente a zur Herstellung der Oligomere sind hydroxi- und/oder aminofunktionelle Verbindungen mit einer Funktionalität von 3 bis 4, bevorzugt 3, geeignet. Diese Verbindungen weisen zahlenmittlere Molekulargewichte von 300 bis 4000, bevorzugt vom 500 bis 2000, auf.

Beispiele für geeignete Verbindungen sind polyoxialkylierte Triole, wie z. B. ethoxilierte und propoxilierte Triole, bevorzugt ethoxilierte Triole, besonders bevorzugt mit einem zahlenmittleren Molekulargewicht größer gleich 1000. Als Triole werden beispielsweise Glycerin oder Trimethylolpropan eingesetzt.

Geeignet sind auch die entsprechenden aminofunktionellen Verbindungen, wie z. B. die aus polyalkoxilierten Triolen abgeleiteten aminofunktionellen Verbindungen. Beispiele sind die unter dem Namen JEFFAMIN® der Firma Texaco erhältlichen Produkte, z. B. JEFFAMIN® T 403, T 3000, T 5000, C 346, DU 700 und BuD 2000.

Die aminofunktionellen Verbindungen können dabei sowohl primäre als auch sekundäre Aminogruppen enthalten.

Daneben sind auch Verbindungen geeignet, die sowohl Amino- als auch Hydroxylgruppen enthalten.

Als Komponente b geeignet sind Verbindungen, die pro Molekül zwei Hydroxyl- und/oder Aminogruppen enthalten. Diese Verbindungen weisen zahlenmittlere Molekulargewichte von 200 bis 4000, bevorzugt 600 bis 2000, auf.

Beispiele für geeignete Verbindungen b sind Polyoxialkylenglykole und Polyoxialkylendiamine, wobei Alkylengruppen mit 1 bis 6 C-Atomen bevorzugt sind. So sind beispielsweise Polyoxiethylenglykole mit einem zahlenmittleren Molekulargewicht von 1000, 1500, 2000 oder 2500 sowie Polyoxipropylenglykole mit den entsprechenden Molekulargewichten und Polytetramethylenglykole geeignet. Auch polyethoxilierte und polypropoxilierte Diole können eingesetzt werden, wie z. B. die ethoxilierten bzw. propoxilierten Derivate von Butandiol, Hexandiol usw. Einsetzbar sind weiterhin auch die bereits auf Seite 10 der vorliegenden Anmeldung beschriebenen Polyesterdiole. Als Komponente b einsetzbar sind ferner auch die auf den Seiten 10 bis 11 der vorliegenden Anmeldung beschriebenen Polycaprolactondiole.

Selbstverständlich können als Komponente b auch die entsprechenden Diamine sowie Verbindungen mit einer OH- und einer Aminogruppe eingesetzt werden. Beispiele für geeignete Verbindungen sind die unter dem Namen JEFFAMIN® D 230, D 400, D 2000, D 4000, ED 600, ED 900, ED 2001 und ED 4000 der Firma Texaco erhältlichen Produkte.

Bevorzugt wird als Komponente b eine Mischung aus

$b_1$) 0 bis 90 Mol-% mindestens eines Polyetherdiols und

$b_2$) 10 bis 100 Mol-% mindestens eines modifizierten Polyetherdiols aus

$b_{21}$) mindestens einem Polyetherdiol

$b_{22}$) mindestens einer aliphatischen und/oder cycloaliphatischen Dicarbonsäure und

$b_{23}$) mindestens einer aliphatischen, gesättigten Verbindung mit einer Epoxidgruppe und mit 8 bis 21 C-Atomen pro Molekül,

eingesetzt, wobei die Summe der Anteile der Komponenten $b_1$ und $b_2$ sowie die Summe der Anteile der Komponenten $b_{21}$ bis $b_{23}$ jeweils 100 Mol-% beträgt.

Zur Herstellung der modifizierten Polyetherdiole nach den üblichen Methoden werden die Komponeten $b_{21}$ bis $b_{23}$ in solchen Mengen eingesetzt, daß das Äquivalentverhältnis der OH-Gruppen der Komponente $b_{21}$ zu den Carboxylgruppen der Komponente $b_{22}$ zwischen 0,45 und 0,55, bevorzugt 0,5, liegt und daß das Äquivalentverhältnis der Epoxidgruppen der Komponente $b_{23}$ zu den Carboxylgruppen der Komponente $b_{22}$ zwischen 0,45 und 0,55, bevorzugt 0,5, liegt.

Beispiele für geeignete Polyetherdiole $b_1$ und $b_{21}$ sind die bereits aufgeführten Polyoxialkylenglykole, wobei die Alkylengruppen 1 bis 6 C-Atome aufweisen. Bevorzugt werden dabei als Komponente $b_1$ Polyoxipropylenglykole mit einem zahlenmittleren Molekulargewicht zwischen 600 und 2000 eingesetzt. Als Komponente $b_{21}$ werden bevorzugt Polyoxibutylenglykole (Poly-THF) mit einem zahlenmittleren Molekulargewicht > 1000 eingesetzt.

Als Komponente $b_{22}$ werden bevorzugt aliphatische sowie cycloaliphatische Dicarbonsäuren mit 8 bis 36 C-Atomen pro Molekül eingesetzt, wie z. B. Hexahydrophthalsäure.

Als Komponente $b_{23}$ geeignet sind beispielsweise epoxidierte Vinylcyclohexanverbindungen, epoxidierte, monoolefinisch ungesättigte Fettsäuren und/oder Polybutadiene.
Bevorzugt werden als Komponente $b_{23}$ Glycidylester verzweigter Monocarbonsäuren, wie z. B. der Glycidylester der Versaticsäure, eingesetzt.

Zur Einführung der ethylenisch ungesättigten Gruppen in das Polyurethan-Oligomer werden monoethylenisch ungesättigte Verbindungen mit einer Gruppe mit einem aktiven Wasserstoffatom eingesetzt, die ein zahlenmittleres Molekulargewicht von 116 bis 1000, bevorzugt 116 bis 400, aufweisen. Als Beispiele für geeignete Komponenten c seien z. B. Hydroxialkylester ethylenisch ungesättigter Carbonsäuren, wie z.B. Hydroxiethylacrylat, Hydroxipropylacrylat, Hydroxibutylacrylat, Hydroxiamylacrylat, Hydroxihexylacrylat, Hydroxioctylacrylat sowie die entsprechenden Hydroxialkylester der Methacryl-, Fumar-, Malein-, Itacon-, Croton- und Isocrotonsäure genannt, wobei allerdings die Hydroxialkylester der Acrylsäure bevorzugt sind.

Weiterhin als Komponente c geeignet sind Addukte aus Caprolacton und einem der oben genannnten Hydroxialkylester ethylenisch ungesättigter Carbonsäuren. Bevorzugt werden Addukte der Hydroxialkylester der Acrylsäure mit einem zahlenmittleren Molekulargewicht von 300 bis 1000 eingesetzt.

Für die Herstellung der erfindungsgemäßen Oligomere als Komponente d geeignet sind aliphatische und/oder cycloaliphatische Diisocyanate.
Beispiele für geeignete Diisocyanate sind die bereits auf den Seiten 8 und 9 der vorliegenden Anmeldung genannten aliphatischen und cycloaliphatischen Diisocyanate. Bevorzugt eingesetzt werden Isophorondiisocyanat und Trimethylhexamethylen-1,6-diisocyanat.

Die Oligomere können auf unterschiedliche Weise hergestellt werden. So ist es beispielsweise möglich, zunächst das Diisocyanat d mit den Kettenverlängerungsmitteln a und b umzusetzen und anschließend die restlichen freien Isocyanatgruppen mit der ethylenisch ungesättigten Verbindung c umzusetzen.

Außerdem ist es möglich, die Oligomere herzustellen, indem zunächst ein Teil der Isocyanatgruppen der Komponente d mit der ethylenisch ungesättigten Verbindung c umgesetzt wird und indem anschließend die restlichen freien Isocyanatgruppen mit den Kettenverlängerungsmitteln a und b umgesetzt werden.

Weiterhin ist es möglich, die Polyurethan-Oligomere nach den in der EP-A-223 086 auf Seite 5 beschriebenen Verfahren herzustellen.

Bevorzugt werden die Polyurethan-Oligomere mittels eines zweistufigen Verfahrens hergestellt, indem zunächst die stöchiometrische Polyaddition der Komponenten a bis d solange durchgeführt wird, bis mehr als 85 % der NCO-Gruppen der Komponente d abreagiert haben. In diesem ersten Verfahrensschritt werden die Komponenten a bis d in solchen Mengen eingesetzt, daß das Äquivalentverhältnis der NCO-Gruppen der Komponente d zu den aktiven Wasserstoffatomen der Komponenten a bis c 1:1 beträgt.

In einem zweiten Verfahrensschritt wird dann der Rest der übrigen Komponenten (entsprechend dem gewünschten NCO:OH-Verhältnis) zugesetzt und die Reaktion bis zu einem Umsatz der NCO-Gruppen > 99 % fortgeführt. Bevorzugt wird in diesem zweiten Verfahrensschritt weitere Komponente c zugesetzt und durch die Zugabe dieser Komponente c das gewünschte NCO: OH-Äquivalentverhältnis eingestellt.

Diese Urethan-Oligomere weisen üblicherweise zahlenmittlere Molekulargewichte von 2500 bis 10000, bevorzugt 3000 bis 6000 (gemessen mit GPC gegen Polystyrolstandard), gewichtsmittlere Molekulargewichte von 5000 bis 50000, bevorzugt 7000 bis 20000 (gemessen mit GPC gegen Polystyrolstandard), Doppelbindungsgehalte von 0,5 bis 1,5, bevorzugt 0,6 bis 0,9 mol/kg sowie eine Funktionalität von >2 bis 3,5, bevorzugt 2,2 bis 2,8, jeweils pro statistischem Durchschnittspolymermolekül, auf.

Das ungesättigte Polyurethan (A) wird in den Überzugsmassen in einer Menge von 56 bis 89 Gew.-%, bezogen auf die Überzugsmasse, eingesetzt.

Neben dem gerade beschriebenen Polyurethan (A) enthält das erfindungsgemäße Überzugsmittel noch 10 bis 30 Gew.-%, bezogen auf die Überzugsmasse, mindestens eines ethylenisch-ungesättigten Monomers (B). Beispiele für geeignete Monomere sind Ethoxiethoxiethylacrylat, N-Vinylpyrrolidon, Phenoxiethylacrylat, Dimethylaminoethylacrylat, Hydroxiethylacrylat, Butoxiethylacrylat, Isobornylacrylat, Dimethylacrylamid und Dicyclopentylacrylat. Geeignet sind außerdem Di- und Polyacrylate, wie z.B. Butandioldiacrylat, Trimethylolpropandi- und -triacrylat, Pentaerythritdiacrylat sowie die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist.
Geeignet sind auch Mischungen der gerade beschriebenen Monomeren.

Bevorzugt eingesetzt werden N-Vinylpyrrolidon, Phenoxiethylacrylat, Isobornylacrylat sowie Mischungen dieser Monomere.

Der in den erfindungsgemäßen Überzugsmassen in einer Menge 0,5 bis 8 Gew.-%, bevorzugt 2 bis 5 Gew.-%, bezogen auf die Überzugsmasse, eingesetzte Photoinitiator variiert mit der zur Härtung der

Beschichtungsmittel eingesetzten Strahlung (UV-Strahlung, Elektronenstrahlung, sichtbares Licht). Bevorzugt werden die erfindungsgemäßen Überzugsmassen mittels UV-Strahlung gehärtet. In diesem Fall werden üblicherweise Photoinitiatoren auf Keton-Basis eingesetzt, beispielsweise Acetophenon, Benzophenon, Diethoxiacetophenon, m-Chloroacetophenon, Propiophenon, Benzoin, Benzil, Benzildimethylketal, Anthrachinon, Thioxanthon und Thixanthon-Derivate sowie Mischungen verschiedener Photoinitiatoren. Gegebenenfalls können zusammen mit den genannten Photoinitiatoren verschiedene Amine, z.B. Diethylamin und Triethanolamin, in Mengen bis zu 4 Gew.-%, bezogen auf die Überzugsmasse, eingesetzt werden, die als Synergisten wirken.

Als erfindungswesentlichen Bestandteil enthalten die Überzugsmassen 0,05 bis 6 Gew.-%, bevorzugt 1,2 bis 2,2 Gew.-%, bezogen auf das Gesamtgewicht der Überzugsmasse,

$d_1$) mindestens ein Azidosilan der allgemeinen Formel (I)

$N_3\text{-}R^3\text{-}Si\text{-}R^1{}_n(OR^2)_{3-n}$ (I)

worin $R^1$ für eine $C_1$-$C_3$-Alkyl-, eine Phenyl-, Benzyl- oder Toluylgruppe, $R^2$ für eine $C_1$-$C_4$-Alkyl-, $C_2$-$C_4$-Alkoxialkyl-, eine Phenyl- oder Benzylgruppe, $R^3$ für eine $C_1$-$C_8$-Alkylengruppe, welche durch ein Sauerstoffatom, Schwefelatom oder eine -(N-$R^4$)-Gruppe, worin $R^4$ ein Wasserstoff, eine Methyl-, Ethyl- oder Phenylgruppe bedeutet, unterbrochen sein kann, und n für 0,1 oder 2 steht, und ggf.

$d_2$) ggf. mindestens ein Aminoalkoxisilan der Formel (II)

$H_2N\text{-}R^5\text{-}Si\text{-}R^6{}_m(OR^7)_{3-m}$ (II)

worin $R^5$ für eine $C_1$-$C_6$-Alkylen-, eine $C_5$-$C_6$-Cycloalkylen- oder -Arylengruppe, welche zusätzlich durch ein oder zwei $C_1$-$C_3$-Alkylgruppen substituiert sein können, und $R^6$ und $R^7$ unabhängig voneinander für eine $C_1$-$C_6$-Alkyl- oder eine $C_5$-$C_6$-Cycloalkylgruppe, welche ebenfalls zusätzlich durch ein oder zwei $C_1$-$C_3$-Alkylgruppen substituiert sein können stehen und m = 0, 1 oder 2 sein kann.

Bevorzugt werden als Azidosilane der Formel (I) aliphatische Azidosilane, besonders bevorzugt solche, in denen $R_2$ für eine $C_1$-$C_4$-Alkylgruppe, $R^3$ für eine $C_1$-$C_6$-Alkylengruppe steht und n = 0 ist, eingesetzt. Ganz besonders bevorzugt ist 3-Azidopropyltriethoxisilan.
Ferner können in den erfindungsgemäßen Überzugsmassen auch Mischungen aus mindestens einem Azidosilan und mindestens einem Aminoalkoxisilan eingesetzt werden, wobei aber bevorzugt Azidosilane allein eingesetzt werden. Als Aminoalkoxisilane zur Kombination mit den Azidosilanen besonders geeignet sind N-$\beta$-Aminoethyl-$\gamma$-aminopropyltrimethoxisilan, $\gamma$-Aminopropyltrimethoxisilan, N-Methyl-$\gamma$-aminopropyltrimethoxisilan und/oder triaminomodifiziertes Propyltrimethoxisilan (z.B. Haftvermittler DYNASYLAN®, "Typ TRIAMO", Handelsprodukt der Dynamit Nobel Chemie).
Werden Mischungen eingesetzt, so liegt das Mischungsverhältnis üblicherweise zwischen 0,05 und 4,0 Gew.-% Azidosilan und 0,05 bis 5,0 Gew.-% Aminoalkoxisilan, bevorzugt 0,2 bis 1,1 Gew.-% Azidosilan und 0,1 bis 0,9 Gew.-% Aminoalkoxisilan, bezogen auf das Gesamtgewicht der Überzugsmasse.

Die erfindungsgemäßen Überzugsmassen können ggf. außerdem noch übliche Hilfs- und Zusatzstoffe in üblichen Mengen, bevorzugt 0,05 bis 10 Gew.-%, bezogen auf die Überzugsmasse, enthalten. Beispiele für derartige Stoffe sind Verlaufsmittel und Weichmacher.

Die Überzugsmassen können mittels bekannter Applikationsmethoden, wie z.B. Spritzen, Walzen, Fluten, Tauchen, Rakeln oder Streichen, auf die Glasoberfläche aufgebracht werden.

Die Härtung der Lackfilme erfolgt mittels Strahlung, bevorzugt mittels UV-Strahlung. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA Technology, Academic Press, London, United Kingdom 1984) und bedürfen keiner weiteren Beschreibung.

Gegenstand der vorliegenden Erfindung ist auch ein Verfahren zum Beschichten einer Glasoberfläche, bei dem

I.) eine strahlenhärtbare Überzugsmasse aufgebracht wird, die

A) 56 bis 89 Gew.-%, bezogen auf die Überzugsmasse, mindestens eines, gegebenenfalls Harnstoffgruppen enthaltenden, ethylenisch ungesättigten Polyurethans,

B) 10 bis 30 Gew.-%, bezogen auf die Überzugsmasse, mindestens eines ethylenisch ungesättigten Monomers,

C) 0,5 bis 8 Gew.-%, bezogen auf die Überzugsmasse, mindestens eines Photoinitiators sowie

D) 0,05 bis 6 Gew.-%, bezogen auf die Überzugsmasse, eines Silans,

enthält, wobei die Summe der Komponenten (A) bis (D) jeweils 100 Gew.-% beträgt,

II.) die Überzugsmasse mittels UV- oder Elektronenstrahlung gehärtet wird.

Das Verfahren ist dadurch gekennzeichnet, daß die Überzugsmasse als Komponente (D)

$d_1$) mindestens ein Azidosilan der allgemeinen Formel (I)

$N_3$-$R^3$-Si-$R^1{}_n(OR^2)_{3-n}$ (I)

worin $R^1$ für eine $C_1$-$C_3$-Alkyl-, eine Phenyl-, Benzyl- oder Toluylgruppe, $R^2$ für eine $C_1$-$C_4$-Alkyl-, $C_2$-$C_4$-Alkoxialkyl-, eine Phenyl- oder Benzylgruppe, $R^3$ für eine $C_1$-$C_8$-Alkylengruppe, welche durch ein Sauerstoffatom, Schwefelatom oder eine -(N-$R^4$)-Gruppe, worin $R^4$ ein Wasserstoff, eine Methyl-, Ethyl- oder Phenylgruppe bedeutet, unterbrochen sein kann, und n für 0,1 oder 2 steht, und ggf.

$d_2$) ggf. mindestens ein Aminoalkoxisilan der Formel (II)

$H_2N$-$R^5$-Si-$R^6{}_m(OR^7)_{3-m}$ (II)

worin $R^5$ für eine $C_1$-$C_6$-Alkylen-, eine $C_5$-$C_6$-Cycloalkylen- oder -Arylengruppe, welche zusätzlich durch ein oder zwei $C_1$-$C_3$-Alkylgruppen substituiert sein können, und $R^6$ und $R^7$ unabhängig voneinander für eine $C_1$ - $C_6$-Alkyl- oder eine $C_5$ - $C_6$-Cycloalkylgruppe, welche ebenfalls zusätzlich durch ein oder zwei $C_1$ -$C_3$-Alkylgruppen substituiert sein können, stehen und m = 0, 1 oder 2 sein kann, eingesetzt wird.

Zur näheren Beschreibung des in dem erfindungsgemäßen Verfahren eingesetzten Überzugsmittels sowie der Durchführung dieses Verfahrens wird auf die Seiten 6 bis 23 dieser Beschreibung verwiesen.

Das erfindungsgemäße Verfahren ist besonders gut geeignet für die Beschichtung von optischen Glasfasern. Insbesondere bei Verwendung der optischen Glasfasern als Lichtwellenleiter ist es wichtig, daß die zum Schutz der Oberfläche applizierten Überzugsmassen auch bei Feuchtigkeitsbelastung eine gute Haftung auf der Glasfaseroberfläche aufweisen.

Haftungsverluste der Beschichtung nach Feuchtigkeitsbelastung - die sich bei der Verwendung der Glasfasern als Lichtwellenleiter nicht vermeiden läßt (z.B. liegen Glasfasern an Kopplungsstationen frei an der Luft) - führen zu Lackschäden auf der Glasfaseroberfläche. Diese dann ungeschützte Oberfläche kann nun sehr leicht, beispielsweise durch Staubkörner, beschädigt werden, was zu einem Verlust der optischen Eigenschaften führt. Gerade durch das erfindungsgemäße Verfahren bzw. die erfindungsgemäßen Überzugsmassen ist es aber möglich, diese Nachteile zu vermeiden und Beschichtungen mit sehr guter Haftung auch nach Feuchtigkeitsbelastung zur Verfügung zu stellen.

Die erfindungsgemäßen Überzugsmassen können dabei entweder in Form einer Einschichtlackierung oder als Grundierung einer Zweischichtlackierung auf die Glasfaser aufgebracht werden. Geeignete Decklacke im Fall der Zweischichtlackierung sind beispielsweise in der EP-B- 114 982 beschrieben.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1 (Vergleich)

Es wird nach bekannten Methoden (vgl. z.B. EP-B-114 982) eine strahlenhärtbare Überzugsmasse, bestehend aus 75,8 Teilen ungesättigtem Polyurethan, 9,2 Teilen Trimethylolpropantriacrylat, 12 Teilen Phenoxiethylacrylat, 0,5 Teilen Benzildimethylketal und 2,5 Teilen Benzophenon hergestellt, indem in Gegenwart von Trimethylolpropantriacrylat und Phenoxiethylacrylat zunächst 4 Mole 4,4'-Methylen-bis-(cyclohexylisocyanat) mit 2 Molen Polyoxipropylenglykol (Molekulargewicht 1000) umgesetzt werden. Dieses erhaltene Zwischenprodukt wird mit 2 Molen 2-Hydroxiethylacrylat und danach mit 1 Mol Polyoxipropylendiamin (Molekulargewicht 230) umgesetzt. Danach werden die Photoinitiatoren zu der Mischung gegeben. Gut gereinigte (vor allem fettfreie) Glasplatten (Breite x Länge = 98 x 151 mm) werden am Rand mit Tesakrepp®-Klebeband Nr. 4432 (Breite 19 mm) abgeklebt und die Überzugsmasse aufgerakelt (Trockenfilmstärke 180 $\mu$m).

Die Aushärtung erfolgt mit Hilfe einer UV-Bestrahlungsanlage, ausgerüstet mit zwei Hg-Mitteldruckstrahlern von je 80 W/cm Lampenleistung, bei einer Bandgeschwindigkeit von 40 m/Minute, in 2 Durchläufen bei Halblastbetrieb (= 40 W/cm).

Die eingestrahlte Dosis beträgt hierbei 0,08 J/cm$^2$ (gemessen mit dem Dosimeter UVICURE, System EIT der Firma Eltosch).

Sofort anschließend wird die Haftung wie folgt geprüft:

- Folienanfang vorsichtig mit einer Klinge vom Glas etwas lösen.
- Mit Hilfe von Klebeband einen Drahtbügel an dem gelösten Folienteil befestigen.
- Federwaage einhängen und mit möglichst konstanter Geschwindigkeit in rechtem Winkel abziehen.
- Benötigte Abzugskraft in g von der Meß-Skala ablesen.

Die Auswertung der Haftungsprüfung erfolgt durch Mittelung der erhaltenen Werte aus einer Doppelbestimmung und Überprüfung der Reproduzierbarkeit von guten (= hohen) Haftungswerten durch mehrere Wiederholungen.

Das Ergebnis der Haftungsprüfung ist in Tabelle 1 dargestellt.

Neben dieser durchgeführten Haftungsprüfung ist auch ein Rollenschälversuch gemäß DIN 55 289 möglich, der aber nicht durchgeführt wurde.

Zur Prüfung der Haftung nach Feuchtigkeitsbelastung werden außerdem die Glasplatten direkt nach der Härtung 24 h in geeigneten Klimakammern mit einer definierten Luftfeuchtigkeit von 90 % relativer Luftfeuchtigkeit (r.F.) (entsprechend DIN 50005) bei Raumtemperatur (25 °C) gelagert.

Sofort nach Beendigung der Exposition wird der Abziehtest mit der Federwaage analog der Haftungsprüfung direkt nach Bestrahlung durchgeführt.

Die Auswertung der Haftungsprüfung erfolgt auch in diesem Fall durch Mittelwertbildung aus einer Doppelbestimmung. Bei guten (= hohen) Haftungswerten werden mindestens zwei Wiederholungsmessungen zur Überprüfung der Reproduzierbarkeit durchgeführt.

Das Ergebnis dieser Prüfung ist ebenfalls in Tabelle 1 dargestellt.

Die durchgeführte Prüfung der Haftung auf Fensterglas ergibt als Labormethode gute, aussagekräftige Ergebnisse. Diese Methode wird auch bei den Glasfaserherstellern durchgeführt, da sie praxisnahe Werte ergibt, die mit den Haftungswerten auf optischen Glasfasern (typische Stärke der Faser 125 µm) sehr gut übereinstimmen.

Beispiel 2 (Vergleich)

Analog zu dem Vergleichsbeispiel 1 wird ein strahlenhärtbares Beschichtungsmittel auf Basis des ungesättigten Polyurethans hergestellt. Im Unterschied zum Vergleichsbeispiel 1 enthält das Beschichtungsmittel zusätzlich 2 Gew.-%, bezogen auf das Gesamtgewicht des Beschichtungsmittels, γ-Glycidyloxipropyltri-methoxisilan.

Analog zum Vergleichsbeispiel 1 wird dieses Beschichtungsmittel mittels eines Rakels auf Glasplatten aufgetragen (Trockenfilmstärke 180 µm) und mit einer Quecksilbermitteldruckdampflampe (Dosisleistung ebenfalls 0,08 g /$cm^2$) gehärtet. Direkt nach der Aushärtung der Beschichtungsmittel sowie nach 24 h Lagerung bei 90 % relativer Luftfeuchtigkeit bei Raumtemperatur wird, wie im Vergleichsbeispiel 1 beschrieben, die Haftung der Beschichtung gemessen. Die Ergebnisse sind in Tabelle 1 dargestellt.

Beispiele 3 und 4 (Vergleich)

Analog zu Beispiel 2 werden Glasbeschichtungen hergestellt, jedoch mit dem Unterschied, daß statt 2 Gew.-%, bezogen auf die Gesamtzusammensetzung, γ-Glycidyloxipropyltrimethoxisilan jetzt 2 Gew.-% 3-Butenyltriethoxisilan (Beispiel 3) bzw. 2 Gew.-% des Monohydrochlorids des N-β-(N-Vinylbenzylamino)-ethyl-γ-aminopropyltrimethoxysilans (Formel

$(CH_3O)_3Si(CH_2)_3NH(CH_2)_2NH-CH_2-$ 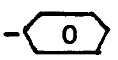 $-CH=CH_2.HCl)$

(Beispiel 4), jeweils bezogen auf das Gesamtgewicht des Beschichtungsmittels, eingesetzt werden. Die Ergebnisse der Haftungsprüfung sind in Tabelle 1 dargestellt.

Beispiele 5 - 7 (Vergleich)

Analog zu Beispiel 2 werden Glasbeschichtungen hergestellt, jedoch mit dem Unterschied, daß statt 2 Gew.-% γ-Glycidyloxipropyltrimethoxysilan jetzt 1 (Beispiel 5) bzw. 2 (Beispiel 6) bzw. 3 (Beispiel 7) Gew.-% N-β-Aminoethyl-γ-aminopropyltrimethoxisilan,jeweils bezogen auf das Gesamtgewicht des Beschichtungsmittels, eingesetzt werden.

Die Ergebnisse der Haftungsprüfung sind in Tabelle 1 dargestellt.

Beispiele 8 - 10

Analog zu Beispiel 2 werden Glasbeschichtungen hergestellt, jedoch mit dem Unterschied, daß statt 2 Gew.-% γ-Glycidyloxipropyltrimethoxisilan jetzt 1 (Beispiel 8) bzw. 2 (Beispiel 9) bzw. 3 (Beispiel 10) Gew.-

% 3-Azidopropyl-triethoxisilan, jeweils bezogen auf das Gesamtgewicht des Beschichtungsmittels, eingesetzt werden. Die Ergebnisse der Haftungsprüfung sind in Tabelle 1 dargestellt.

Beispiele 11 - 13

Analog zu Beispiel 2 werden Glasbeschichtungen hergestellt, jedoch mit dem Unterschied, daß statt 2 Gew.-% $\gamma$-Glycidyloxipropyltrimethoxisilan jetzt 0,5 Gew.-% 3-Azidopropyltriethoxisilan und 0,5 Gew.-% N-$\beta$-Aminoethyl-$\gamma$-aminopropyltrimethoxisilan (Beispiel 11) bzw. 0,75 Gew.-% 3-Azidopropyltriethoxisilan und 0,75 Gew.-% N-$\beta$-Aminoethyl-$\gamma$-aminopropyltrimethoxisilan (Beispiel 12) bzw. 1,0 Gew.-% 3-Azidopropyltriethoxisilan und 1,0 Gew.-% N-$\beta$-Aminoethyl-$\gamma$-aminopropyltrimethoxisilan (Beispiel 13), jeweils bezogen auf das Gesamtgewicht des Beschichtungsmittels, eingesetzt werden. Die Ergebnisse der Haftungsprüfung sind in Tabelle 1 dargestellt.

Beispiel 14 - 16

In einem mit Rührer, Inertgaseinleitung und Thermofühler ausgestatteten Kessel werden 51,1 Teile Polytetrahydrofuran mit einem zahlenmittleren Molekulargewicht von 1000 und einer OH-Zahl von 118 mg KOH/g und 19,1 Teile Hexahydrophthalsäureanhydrid auf 120 °C erwärmt und solange bei dieser Temperatur gehalten, bis eine Säurezahl von 102 mg KOH/g erreicht ist. Dann werden 0,02 % Chromoctoat, bezogen auf das Gewicht der Mischung aus Poly-THF, Hexahydrophthalsäure und Glycidylester der Versaticsäure und 29,7 Teile des Glycidylesters der Versaticsäure mit einem Epoxidäquivalentgewicht von 266 zugegeben. Die Mischung wird so lange auf 120 °C erwärmt, bis das Reaktionsprodukt ein Epoxidäquivalentgewicht > 20.000, eine Säurezahl von 4 mg KOH/g und eine OH-Zahl von 60 mg KOH/g aufweist.

Das modifizierte Polyetherdiol weist ein mittleres Molgewicht $M_n = 1860$ (berechnet aus der OH-Zahl) auf.

Die Viskosität einer 80 %igen Lösung in Butylacetat beträt 3,8 d Pas (gemessen bei 23 °C mit dem Platte/Kegel-Viskosimeter).

In einem mit Rührer, Zulaufeinrichtungen, Thermofühler und Lufteinleitung versehenen Kessel werden 0,35 Mol eines handelsüblichen, ethoxilierten Trimethylolpropans mit einem zahlenmittleren Molekulargewicht von 1000, 0,65 Mol handelsübliches Polyoxipropylenglykol mit einem zahlenmittleren Molekulargewicht von 600, 0,65 Mol des oben beschriebenen modifzierten Polyetherdiols, 1,75 Mol Hydroxiethylacrylat, 0,05 % Dibutylzinndilaurat und 0,1 % 2,6-Di-tert.-butylcresol, jeweils bezogen auf das Geamtgewicht des modifizierten Polyetherdiols, des ethoxilierten Trimethylolpropans, des Polyoxipropylenglykols, des Hydroxiethylacrylates und des Isophorondiisocyanates, und 30 ppm Phenothiazin vorgelegt und auf 60 °C erwärmt. Danach werden im Laufe von 2,5 h 2,70 Mole Isophorondiisocyanat bei 50 °C zudosiert. Danach wird mit Phenoxiethylacrylat auf einen theoretischen Festkörper von 90 % verdünnt und die Temperatur so lange bei 60 °C gehalten, bis ein NCO-Wert von 1 % erreicht ist. Dann werden 0,05 % Dibutylzinndilaurat und 0,51 Mole eines handelsüblichen Hydroxiethylacrylat Caprolacton-Oligomers mit einem zahlenmittleren Molekulargewicht von 344 (Handelsprodukt TONE M 100 der Firma Union Carbide) bei einer Temperatur von 80 °C zugegeben und die Temperatur so lange bei 80 °C gehalten, bis ein NCO-Wert von < 0,1 % erreicht ist. Das so erhaltene Oligomer weist einen Doppelbindungsgehalt von 0,6 mol/kg und eine Funktionalität von 2,5 auf.

Eine 40 %ige Lösung (bezogen auf den theoretischen Festkörpergehalt) des erhaltenen Oligomers 1 in Phenoxiethylacrylat weist eine Viskosität von 4,9 dPas auf (gemessen bei 23 °C mit dem Platte-Kegel-Viskosimeter).

Aus 78,1 Teilen der oben beschriebenen 90 %igen Lösung des Urethan-Oligomers 1, 12,1 Teilen Phenoxiethylacrylat, 6,2 Teilen N-Vinylpyrrolidon, 1 Gew.-% 3-Azidopropyltriethoxisilan (Beispiel 14) bzw. 2 Gew.-% 3-Azidopropyltriethoxisilan (Beispiel 15) bzw. 3 Gew.-% 3-Azidopropyltriethoxisilan (Beispiel 16) und 2,0 Teilen Diethoxiacetophenon wird durch Mischen eine strahlenhärtbare Überzugsmasse hergestellt.

Die Applikation und Aushärtung der Beschichtungsmittel sowie die Prüfung der erhaltenen Beschichtungen erfolgt analog zu Beispiel 1.
Die Ergebnisse der Haftungsprüfung sind in Tabelle 2 dargestellt.

Tabelle 1

| Beispiel | Haftvermittler D | Menge (D) (Gew.-%) | Haftung n. Aush. (kg) | Haftung n. 24 h 90 % r.F. (kg) |
|---|---|---|---|---|
| 1 | - | - | 1000-1100 | 50-150 |
| 2 | γ-Glycidyloxipropyltrimethoxisil. | 2 | 1000-1100 | 100-150 |
| 3 | 3-Butenyltriethoxisilan | 2 | 900-1000 | 100-150 |
| 4 | Monohydrochlorid d.N-ß-(N-Vinylbenzylamino)ethyl-γ-aminopropyltrimethoxisilan | 2 | 750-1000 | 50-100 |
| 5 | N-ß-Aminoethyl-γ-aminopropyltrimethoxisilan | 1 | 1000-1100 | 500 |
| 6 | N-ß-Aminoethyl-γ-aminopropyltrimethoxisilan | 2 | 1000-1100 | 500 |
| 7 | N-ß-Aminoethyl-γ-aminopropyltrimethoxisilan | 3 | 900-1000 | 450 |
| 8 | 3-Azidopropyltriethoxisilan | 1 | 1000-1200 | 550 |
| 9 | 3-Azidopropyltriethoxisilan | 2 | 1100-1300 | 650 |
| 10 | 3-Azidopropyltriethoxisilan | 3 | 1000-1200 | 600 |

Fortsetzung Tabelle 1

| Beispiel | | Menge (D) (Gew.-%) | Haftung n. Aush. (kg) | Haftung n. 24 h 90 % r.F. (kg) |
|---|---|---|---|---|
| 11 | 3-Azidopropyltriethoxisilan + | 0,5 | 950-1050 | 500 |
| | N-β-Aminoethyl-γ-aminopropyltrimethoxisilan | 0,5 | | |
| 12 | 3-Azidopropyltriethoxisilan + | 0,75 | 1000-1100 | 500 |
| | N-β-Aminoethyl-γ-aminopropyltrimethoxisilan | 0,75 | | |
| 13 | 3-Azidopropyltriethoxisilan + | 1,0 | 900-1000 | 450 |
| | N-β-Aminoethyl-γ-aminopropyltrimethoxisilan | 1,0 | | |

Tabelle 2

| Beispiel | | Menge (D) (Gew.-%) | Haftung n. Aush. (kg) | Haftung n. 24h 90 % r.F. (kg) |
|---|---|---|---|---|
| 14 | 3-Azidopropyltriethoxisilan | 1 | 900-1100 | 450 |
| 15 | 3-Azidopropyltriethoxisilan | 2 | 1050-1150 | 550 |
| 16 | 3-Azidopropyltriethoxisilan | 3 | 1000-1000 | 500 |

Die Beispiele 1 bis 10 zeigen, daß durch Zusatz von N-β-Aminoethyl-γ-aminopropyltrimethoxisilan der Haftungsverlust nach Feuchtigkeitsbelastung verringert werden kann, während bei Zusatz anderer, bekannter Silanhaftvermittler, wie z.B. γ-Glycidyloxipropyltrimethoxisilan, 3-Butenyltriethoxisilan und dem Monohydrochlorid des N-β-(N-Vinylbenzylamino)ethyl-γ-aminopropyltrimethoxisilans ein erheblicher Haftungsverlust bei Feuchtigkeitsbelastung zu beobachten ist. Durch den Zusatz von 3-Azidopropyltriethoxisilan gelingt es jedoch, den Haftungsverlust nach Feuchtigkeitsbelastung im Vergleich zum Zusatz von N-β-Aminoethyl-γ-aminopropyltrimethoxisilan nochmals deutlich zu verringern.

Bei Verwendung der Aminoalkoxisilane als Haftvermittler kommt es ferner unter Umständen zu unkontrollierbaren Polymerisationsreaktionen (vermutlich Michael-Addition der Aminogruppen) und somit zu einem nicht reproduzierbaren Viskositätsanstieg der Beschichtungsmittel. Dieser Effekt tritt bei Verwendung von Azidosilanen als Haftvermittler nicht auf.

**Patentansprüche**

1. Flüssige, strahlenhärtbare Überzugsmasse für die Beschichtung von Glasoberflächen, enthaltend
   A) 56 bis 89 Gew.-%, bezogen auf die Überzugsmasse, mindestens eines, gegebenenfalls Harnstoffgruppen enthaltenden, ethylenisch ungesättigten Polyurethans,
   B) 10 bis 30 Gew.-%, bezogen auf die Überzugsmasse, mindestens eines ethylenisch ungesättigten Monomers,
   C) 0,5 bis 8 Gew.-%, bezogen auf die Überzugsmasse, mindestens eines Photoinitiators sowie
   D) 0,05 bis 6 Gew.-%, bezogen auf die Überzugsmasse, eines Silans,
   wobei die Summe der Komponenten (A) bis (D) jeweils 100 Gew.-% beträgt,
   dadurch gekennzeichnet, daß sie als Komponente (D)
   $d_1$) mindestens ein Azidosilan der allgemeinen Formel (I)

   $N_3$-$R^3$-Si-$R^1{}_n(OR^2)_{3-n}$ (I)

   worin $R^1$ für eine $C_1$-$C_3$-Alkyl-, eine Phenyl-, Benzyl- oder Toluylgruppe, $R^2$ für eine $C_1$-$C_4$-Alkyl-,$C_2$-$C_4$-Alkoxialkyl-, eine Phenyl- oder Benzylgruppe, $R^3$ für eine $C_1$-$C_8$-Alkylengruppe, welche durch ein Sauerstoffatom, Schwefelatom oder eine -(N-$R^4$)-Gruppe, worin $R^4$ ein Wasserstoff, eine Methyl-, Ethyl- oder Phenylgruppe bedeutet, unterbrochen sein kann, und n für 0,1 oder 2 steht, und ggf.
   $d_2$) mindestens ein Aminoalkoxisilan der allgemeinen Formel (II)

   $H_2$N-$R^5$-Si-$R^6{}_m(OR^7)_{3-m}$ (II)

   worin $R^5$ für eine $C_1$-$C_6$-Alkylen-, eine $C_5$-$C_6$-Cycloalkylen- oder -Arylengruppe, welche zusätzlich durch ein oder zwei $C_1$-$C_3$-Alkylgruppen substituiert sein können und $R^6$ und $R^7$ unabhängig voneinander für eine $C_1$-$C_6$-Alkyl- oder eine $C_5$-$C_6$-Cycloalkylgruppe, welche ebenfalls zusätzlich durch ein oder zwei $C_1$-$C_3$-Alkylgruppen substituiert sein können, stehen und m = 0, 1 oder 2 sein kann,
   enthält.

2. Überzugsmasse nach Anspruch 1, dadurch gekennzeichnet, daß sie als Komponente ($d_1$) Azidosilane der Formel (I) enthält, in denen $R_2$ für eine $C_1$-$C_4$-Alkylgruppe, $R^3$ für eine $C_1$-$C_6$-Alkylengruppe steht und n = 0 ist.

3. Überzugsmasse nach Anspruch 1, dadurch gekennzeichnet, daß sie als Komponente ($d_1$)3-Azidopropyltriethoxisilan enthält.

4. Überzugsmasse nach einem der Ansprüche 1 bis 3, dadurch gekennzeichnet, daß sie als Komponente ($d_2$) N-$\beta$-Aminoethyl-$\gamma$-aminopropyltrimethoxisilan und/oder $\gamma$-Aminopropyltrimethoxisilan und/oder N-Methyl-$\gamma$-aminopropyltrimethoxisilan und/oder triaminomodifiziertes Propyltrimethoxisilan enthält.

5. Überzugsmasse nach einem der Ansprüche 1 bis 4, dadurch gekennzeichnet, daß sie 1,2 bis 2,2 Gew.-%, bezogen auf das Gesamtgewicht der Überzugsmasse, der Komponente (D) enthält.

6. Überzugsmasse nach einem der Ansprüche 1 bis 5, dadurch gekennzeichnet, daß das Monomer (B) N-Vinylpyrrolidon und/oder Phenoxiethylacrylat und/oder Isobornylacrylat ist.

7. Überzugsmasse nach einem der Ansprüche 1 bis 6, dadurch gekennzeichnet, daß sie zusätzlich mindestens einen Synergisten und/oder übliche Hilfs- und Zusatzstoffe enthält.

8. Verfahren zum Beschichten einer Glasoberfläche, bei dem
   I) eine strahlenhärtbare Überzugsmasse aufgebracht wird und
   II) die Überzugsmasse mittels UV- oder Elektronenstrahlung gehärtet wird,
   dadurch gekennzeichnet, daß eine Überzugsmasse nach einem der Ansprüche 1 bis 7 aufgebracht wird.

**9.** Verfahren nach Anspruch 8, dadurch gekennzeichnet, daS die Glasoberfläche die Oberfläche einer optischen Glasfaser ist.

**10.** Optische Glasfaser, dadurch gekennzeichnet, daß sie mit einer Überzugsmasse nach einem der Ansprüche 1 bis 7 beschichtet ist.

**11.** Verwendung der optischen Glasfaser nach Anspruch 10 als Lichtwellenleiter.

**12.** Verwendung der strahlenhärtbaren Überzugsmasse nach einem der Ansprüche 1 bis 7 für die Beschichtung von optischen Glasfasern.

**Claims**

**1.** Liquid, beam-curable coating composition for coating glass surfaces, comprising

A) 56 to 89% by weight, based on the coating composition, of at least one ethylenically unsaturated polyurethane which optionally contains urea groups,

B) 10 to 30% by weight, based on the coating composition, of at least one ethylenically unsaturated monomer,

C) 0.5 to 8% by weight, based on the coating composition, of at least one photoinitiator and

D) 0.05 to 6% by weight, based on the coating composition, of a silane,

the sum of components (A) to (D) in each case being 100% by weight,
characterized in that it comprises, as component (D),

$d_1$) at least one azidosilane of the general formula (I)

$N_3\text{-}R^3\text{-}Si\text{-}R^1{}_n(OR^2)_{3-n}$ (I)

wherein $R^1$ represents a $C_1$-$C_3$-alkyl or a phenyl, benzyl or toluyl group, $R^2$ represents a $C_1$-$C_4$-alkyl or $C_2$-$C_4$-alkoxyalkyl or a phenyl or benzyl group, $R^3$ represents a $C_1$-$C_8$-alkylene group, which can be interrupted by an oxygen atom or sulphur atom or a -(N-$R^4$)-group, wherein $R^4$ denotes a hydrogen or a methyl, ethyl or phenyl group, and n represents 0, 1 or 2, and, if appropriate,

$d_2$) at least one aminoalkoxysilane of the general formula (II)

$H_2N\text{-}R^5\text{-}Si\text{-}R^6{}_m(OR^7)_{3-m}$ (II)

wherein $R^5$ represents a $C_1$-$C_6$-alkylene or a $C_5$-$C_6$-cycloalkylene or -arylene group, which can additionally be substituted by one or two $C_1$-$C_3$-alkyl groups, and $R^6$ and $R^7$ independently of one another represent a $C_1$-$C_6$-alkyl or a $C_5$-$C_6$-cycloalkyl group, which can likewise additionally be substituted by one or two $C_1$-$C_3$-alkyl groups, and m can be 0, 1 or 2.

**2.** Coating composition according to Claim 1, characterized in that it comprises, as component ($d_1$), azidosilanes of the formula (I) in which $R_2$ represents a $C_1$-$C_4$-alkyl group, $R^3$ represents a $C_1$-$C_6$-alkylene group and n is 0.

**3.** Coating composition according to Claim 1, characterized in that it comprises 3-azidopropyltriethoxysilane as component ($d_1$).

**4.** Coating composition according to one of Claims 1 to 3, characterized in that it comprises, as component ($d_2$), N-$\beta$-aminoethyl-$\gamma$-aminopropyltrimethoxysilane and/or $\gamma$-aminopropyltrimethoxysilane and/or N-methyl-$\gamma$-aminopropyltrimethoxysilane and/or triamino-modified propyltrimethoxysilane.

**5.** Coating composition according to one of Claims 1 to 4, characterized in that it comprises 1.2 to 2.2% by weight, based on the total weight of the coating composition, of component (D).

**6.** Coating composition according to one of Claims 1 to 5, characterized in that the monomer (B) is N-vinylpyrrolidone and/or phenoxyethyl acrylate and/or isobornyl acrylate.

**7.** Coating composition according to one of Claims 1 to 6, characterized in that it additionally comprises at least one synergist and/or customary auxiliaries and additives.

**8.** Process for coating a glass surface, in which I) a beam-curable coating composition is applied and II) the coating composition is cured by means of UV radiation or electron beams, characterized in that a coating composition according to one of Claims 1 to 7 is applied.

**9.** Process according to Claim 8, characterized in that the glass surface is the surface of an optical glass fibre.

**10.** Optical glass fibre, characterized in that it is coated with a coating composition according to one of Claims 1 to 7.

**11.** Use of the optical glass fibres according to Claim 10 as optical waveguides.

**12.** Use of the beam-curable coating composition according to one of Claims 1 to 7 for coating optical glass fibres.

**Revendications**

**1.** Enduit liquide, durcissable aux rayonnements pour le revêtement de surfaces en verre, contenant

A) de 56 à 89 % en poids, par rapport à l'enduit, d'au moins un polyuréthane éthyléniquement insaturé, le cas échéant, contenant des groupements urée,

B) de 10 à 30 % en poids, par rapport à l'enduit, d'au moins un monomère éthyléniquement insaturé,

C) de 0,5 à 8 % en poids, par rapport à l'enduit, d'au moins un agent de photoinitiation ainsi que

D) de 0,05 à 6 % en poids, par rapport à l'enduit, d'un silane,

la somme des composants (A) à (D) étant à chaque fois de 100 % en poids, caractérisé en ce qu'il contient en tant que composant (D)

$d_1$) au moins un azidosilane de formule générale (I)

$$N_3\text{-}R^3\text{-}Si\text{-}R^1{}_n(OR^2)_{3-n} \qquad (I)$$

dans laquelle $R^1$ représente un groupement alkyle en $C_1$-$C_3$, un groupement phényle, un groupement benzyle ou un groupement tolyle, $R^2$ représente un groupement alkyle en $C_1$-$C_4$, un groupement alkoxyalkyle en $C_2$-$C_4$, un groupement phényle ou un groupement benzyle, $R^3$ représente un groupement alkylène en $C_1$-$C_8$, qui peut être interrompu par un atome d'oxygène, un atome de soufre ou un groupement -(N-$R^4$), où $R^4$ représente un groupement hydrogène, un groupement méthyle, un groupement éthyle ou un groupement phényle, et n représente 0, 1 ou 2, et, le cas échéant,

$d_2$) au moins un aminoalkoxysilane de formule générale (II)

$$H_2N\text{-}R^5\text{-}Si\text{-}R^6{}_m(OR^7)_{3-m} \qquad (II)$$

dans laquelle $R^5$ représente un groupement alkylène en $C_1$-$C_6$, un groupement cycloalkylène ou un groupement arylène en $C_5$-$C_6$, qui peut en plus être substitué par un ou deux groupements alkyles en $C_1$-$C_3$, et $R^6$ et $R^7$ représentent l'un indépendamment de l'autre un groupement alkyle en $C_1$-$C_6$ ou un groupement cycloalkyle en $C_5$-$C_6$, qui peut être de plus également substitué par un ou deux groupements alkyles en $C_1$-$C_3$, et m peut être 0, 1 ou 2.

**2.** Enduit selon la revendication 1, caractérisé en ce qu'il contient en tant que composant ($d_1$) des azidosilanes de formule (I), dans lesquels $R_2$ représente un alkyle en $C_1$-$C_4$, $R^3$ représente un groupement alkylène en $C_1$-$C_6$ et n est égal à 0.

**3.** Enduit selon la revendication 1, caractérisé en ce qu'il contient en tant que composant ($d_1$) du 3-azidopropyltriéthoxysilane.

**4.** Enduit selon l'une quelconque des revendications 1 à 3, caractérisé en ce qu'il contient en tant que composant ($d_2$) du N-bêta-aminoéthyl-gamma-aminopropyltriméthoxysilane et/ou du gamma-aminopropyltriméthoxysilane et/ou du N-méthyl-gamma-aminopropyltriméthoxysilane et/ou du propyltriméthoxysilane modifié en triamino.

**5.** Enduit selon l'une quelconque des revendications 1 à 4, caractérisé en ce qu'il contient 1,2 à 2,2 % en poids, par rapport au poids total de l'enduit, du composant (D).

**6.** Enduit selon l'une quelconque des revendications 1 à 5, caractérisé en ce que le monomère (B) est la N-vinylpyrrolidone et/ou l'acrylate de phénoxyéthyle et/ou l'acrylate d'isobornyle.

**7.** Enduit selon l'une quelconque des revendications 1 à 6, caractérisé en ce qu'il contient en plus au moins un agent de synergie et/ou des additifs et adjuvants usuels.

**8.** Procédé de revêtement d'une surface en verre, lors duquel
I) on applique un enduit durcissable aux rayonnements et
II) on durcit l'enduit à l'aide d'un rayonnement ultraviolet ou d'un faisceau électronique,
caractérisé en ce que l'on applique un enduit selon l'une quelconque des revendications 1 à 7.

**9.** Procédé selon la revendication 8, caractérisé en ce que la surface en verre est la surface d'une fibre optique en verre.

**10.** Fibre optique en verre, caractérisée en ce qu'elle est revêtue d'un enduit selon l'une quelconque des revendications 1 à 7.

**11.** Utilisation des fibres optiques en verre selon la revendication 10 en tant que guide d'ondes lumineuses.

**12.** Utilisation de l'enduit durcissable aux rayonnements selon l'une quelconque des revendications 1 à 7 pour le revêtement de fibres optiques en verre.